(19) **Europäisches Patentamt / European Patent Office / Office européen des brevets**

(11) **EP 4 113 394 A2**

(12) **EUROPEAN PATENT APPLICATION**

(43) Date of publication:
**04.01.2023 Bulletin 2023/01**

(21) Application number: **22208157.2**

(22) Date of filing: **17.11.2022**

(51) International Patent Classification (IPC):
**G06N 3/08** *(2006.01)* **G06N 3/04** *(2006.01)*

(52) Cooperative Patent Classification (CPC):
**G06N 3/08; G06N 3/0454**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2021 CN 202111372708**

(71) Applicant: **Beijing Baidu Netcom Science Technology Co., Ltd.**
**Beijing 100085 (CN)**

(72) Inventors:
• **LIU, Ji**
**Beijing, 100085 (CN)**

• **ZHANG, Hong**
**Beijing, 100085 (CN)**
• **JIA, Juncheng**
**Beijing, 100085 (CN)**
• **ZHOU, Jiwen**
**Beijing, 100085 (CN)**
• **PENG, Shengbo**
**Beijing, 100085 (CN)**
• **ZHOU, Ruipu**
**Beijing, 100085 (CN)**
• **DOU, Dejing**
**Beijing, 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **FEDERATED LEARNING METHOD, APPARATUS AND SYSTEM, ELECTRONIC DEVICE, AND STORAGE MEDIUM**

(57) The present disclosure provides a federated learning method, apparatus and system, an electronic device, and a storage medium, which relate to a field of an artificial intelligence technology, in particular to fields of computer vision and deep learning technologies. A specific implementation solution includes: performing a plurality of rounds of training until a training end condition is met, so as to obtain a trained global model; and publishing the trained global model to a plurality of devices. Each round of training in the plurality of rounds of training includes: transmitting a current global model to at least some devices in the plurality of devices; receiving trained parameters for the current global model from the at least some devices; performing an aggregation on the received parameters to obtain a current aggregation model; and adjusting the current aggregation model based on a globally shared dataset, and updating the adjusted aggregation model as a new current global model for a next round of training.

200

S210 A plurality of rounds of training are performed until a training end condition is met, so as to obtain a trained global model

S211 A current global model is transmitted to at least some of a plurality of devices

S212 The trained parameters for the current global model are received from the at least some devices

S213 An aggregation is performed on the received parameters to obtain a current aggregation model

S214 The current aggregation model is adjusted based on the globally shared dataset, and the adjusted aggregation model is updated as a new current global model for a next round of training

S220 The trained global model is published to the plurality of devices

FIG. 2

**Description**

TECHNICAL FIELD

The present disclosure relates to a field of an artificial intelligence technology, in particular to fields of distributed data processing and deep learning technologies, and specifically to a federated learning method, apparatus and system, an electronic device, a storage medium, and a computer program product.

BACKGROUND

Federated learning is a distributed machine learning technology. Federated learning does not need to collect user data, but keeps the data locally. A user device may train a machine learning model locally, and upload a trained model to a server. In this way, the data does not leave a local area, so that data privacy and data security of users may be ensured. In addition, since only parameters of the model need to be transmitted, a communication pressure may be reduced.

SUMMARY

The present disclosure provides a federated learning method, apparatus and system, an electronic device, a storage medium, and a computer program product.

According to an aspect of the present disclosure, a federated learning method for training a global model is provided, including: performing a plurality of rounds of training until a training end condition is met, so as to obtain a trained global model; and publishing the trained global model to a plurality of devices, wherein each round of training in the plurality of rounds of training includes: transmitting a current global model to at least some devices in the plurality of devices; receiving trained parameters for the current global model from the at least some devices; performing an aggregation on the received parameters to obtain a current aggregation model; and adjusting the current aggregation model based on a globally shared dataset, and updating the adjusted aggregation model as a new current global model for a next round of training.

According to another aspect of the present disclosure, a federated learning apparatus for training a global model is provided, including: a training module configured to perform a plurality of rounds of training until a training end condition is met, so as to obtain a trained global model; and a global model publishing module configured to publish the trained global model to a plurality of devices, wherein the training module further includes: a transmission sub-module configured to transmit a current global model to at least some devices in the plurality of devices; a receiving sub-module configured to receive trained parameters for the current global model from the at least some devices; an aggregation sub-module configured to perform an aggregation on the received parameters to obtain a current aggregation model; and an adjustment sub-module configured to adjust the current aggregation model based on a globally shared dataset, and update the adjusted aggregation model as a new current global model for a next round of training.

According to another aspect of the present disclosure, a federated learning system for training a global model is provided, including: a server; and a plurality of devices communicatively connected to the server, wherein the server is configured to: perform a plurality of rounds of training until a training end condition is met, so as to obtain a trained global model; and publish the trained global model to a plurality of devices, wherein each round of training in the plurality of rounds of training includes: transmitting a current global model to at least some devices in the plurality of devices; receiving trained parameters for the current global model from the at least some devices; performing an aggregation on the received parameters to obtain a current aggregation model; and adjusting the current aggregation model based on a globally shared dataset, and updating the adjusted aggregation model as a new current global model for a next round of training.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method described according to any exemplary embodiments of the present disclosure.

According to another aspect of the present disclosure, a non-transitory computer-readable storage medium having computer instructions therein is provided, and the computer instructions are configured to cause a computer to implement the method described according to any exemplary embodiments of the present disclosure.

According to another aspect of the present disclosure, a computer program product containing a computer program is provided, and the computer program, when executed by a processor, causes the processor to implement the method described according to any exemplary embodiments of the present disclosure.

It should be understood that content described in this section is not intended to identify key or important features in embodiments of the present disclosure, nor is it intended to limit the scope of the present disclosure. Other features of the present disclosure will be easily understood through the following description.

BRIEF DESCRIPTION OF THE DRAWINGS

The accompanying drawings are used for better understanding of the solution and do not constitute a limitation to the present disclosure, in which:

FIG. 1 shows a schematic diagram of a system architecture of a federated learning method and apparatus according to exemplary embodiments of the present disclosure;

FIG. 2 shows a flowchart of a federated learning method according to exemplary embodiments of the present disclosure;

FIG. 3A shows a schematic diagram of sub-operations of adjusting a current aggregation model based on a globally shared dataset in the federated learning method according to exemplary embodiments of the present disclosure;

FIG. 3B shows a flowchart of operations in each training iteration of adjusting a parameter by using a globally shared dataset according to exemplary embodiments of the present disclosure;

FIG. 4 shows a block diagram of an example of a federated learning apparatus according to exemplary embodiments of the present disclosure;

FIG. 5 shows a block diagram of another example of a federated learning apparatus according to exemplary embodiments of the present disclosure;

FIG. 6 shows a diagram of a signal flow of a federated learning system according to exemplary embodiments of the present disclosure; and

FIG. 7 shows a block diagram of an example of an electronic device for implementing embodiments of the present disclosure.

DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those ordinary skilled in the art should realize that various changes and modifications may be made to embodiments described herein without departing from the scope and spirit of the present disclosure. Likewise, for clarity and conciseness, descriptions of well-known functions and structures are omitted in the following description.

In the technical solution of the present disclosure, an acquisition, a storage, a use, a processing, a transmission, a provision, a disclosure, and an application of user personal information involved comply with provisions of relevant laws and regulations, take essential confidentiality measures, and do not violate public order and good custom. In the technical solution of the present disclosure, authorization or consent is obtained from the user before the user's personal information is obtained or collected.

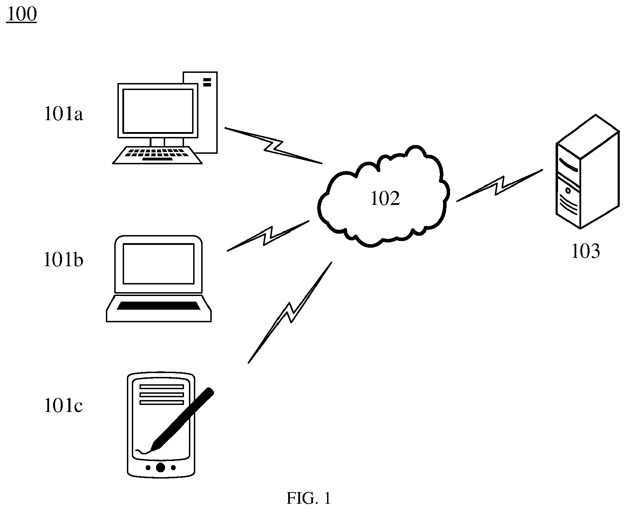

A system architecture of a federated learning method and apparatus provided in the present disclosure will be described below with reference to FIG. 1.

FIG. 1 shows a schematic diagram of a system architecture of a federated learning method and apparatus according to embodiments of the present disclosure.

As shown in FIG. 1, a system architecture 100 according to such embodiments may include a plurality of devices 101a, 101b and 101c, a network 102, and a server 103. The network 102 is a medium for providing a communication link between the plurality of devices and the server 103. The network 102 may include various connection types, such as wired and/or wireless communication links and the like.

At least one of the plurality of devices 101a, 101b and 101c may be used by a user to interact with the server 103 through the network 102, so as to receive or send messages or the like. The plurality of devices 101a, 101b and 101c may be various electronic devices, including but not limited to smart phones, tablet computers, laptop computers, and the like, and are capable of a long-term or temporary storage of data generated by the user using the devices.

In the present disclosure, the server 103 may be interchangeably referred to as a central device, and the plurality of devices 101a to 101c may be interchangeably referred to as edge devices.

For the sake of data security, in existing federated learning methods, the server only performs scheduling related to a learning task, and does not participate in training. Such federated learning methods have a high data security but a poor learning efficiency. Due to possible regional differences, usage time differences and user differences between edge devices, a model trained by the edge devices using respective data may not converge quickly on a whole system, which results in a poor learning efficiency.

In view of this, the present disclosure proposes a federated learning method for training a global model using a globally shared dataset, so as to accelerate a convergence of the global model while ensuring the data security.

It should be understood that the federated learning method provided by embodiments of the present disclosure may generally be performed by the server 103. Accordingly, the federated learning apparatus provided by embodiments of the present disclosure may generally be provided in the server 103. The federated learning method provided by embodiments of the present disclosure may also be performed by a server or server cluster different from the server 103 and capable of communicating with the plurality of devices 101a, 101b and 101c and/or the server 103. Accordingly, the federated learning apparatus provided by embodiments of the present disclosure may also be provided in a server or server cluster different from the server 103 and capable of communicating with the plurality of devices 101a, 101b and 101c and/or the server 103.

In addition, a number and a type of the plurality of devices 101a, 101b and 101c and the server 103 in FIG. 1 are merely schematic. According to implementation needs, any number and type of devices and servers may be provided.

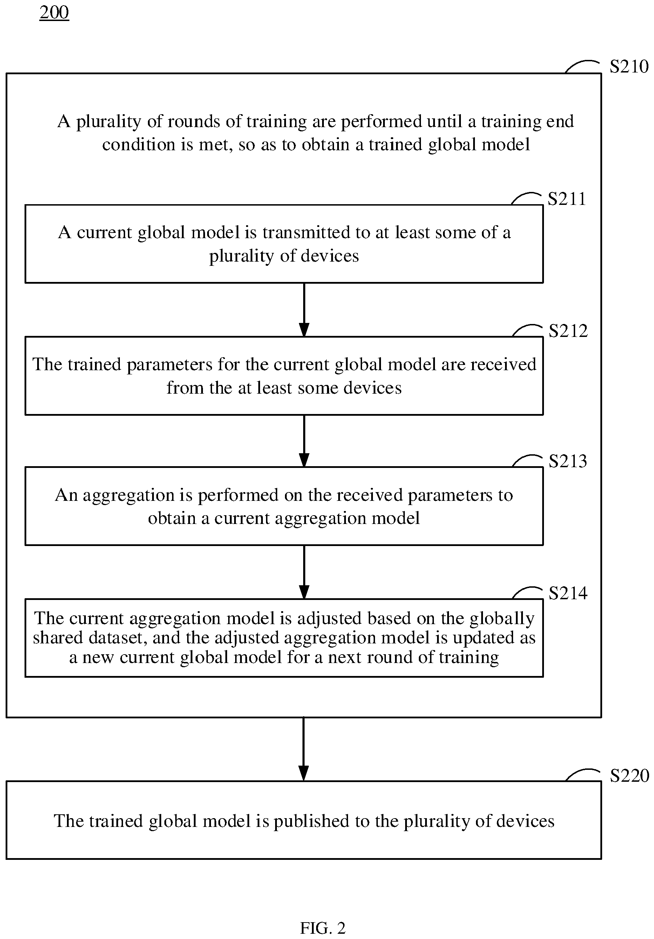

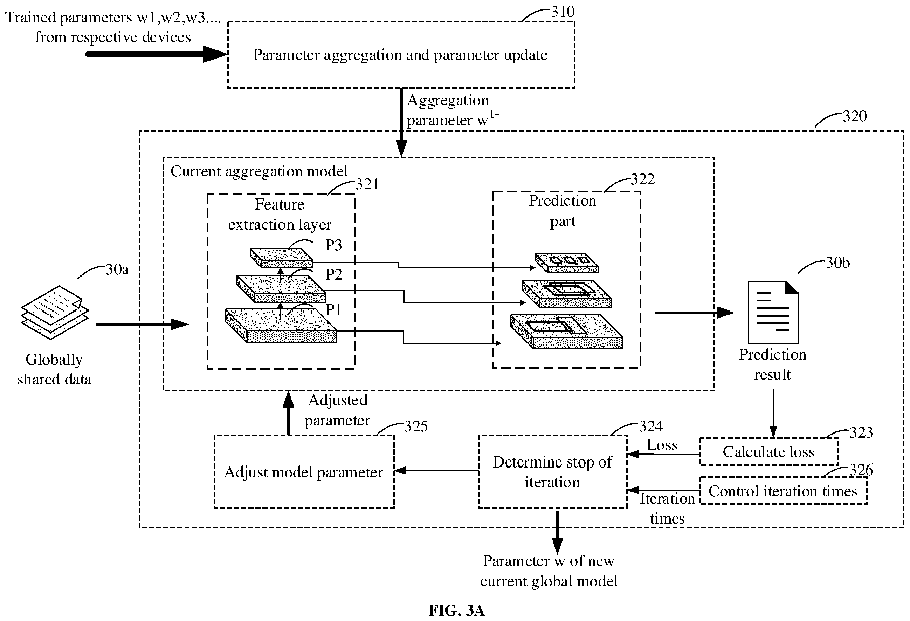

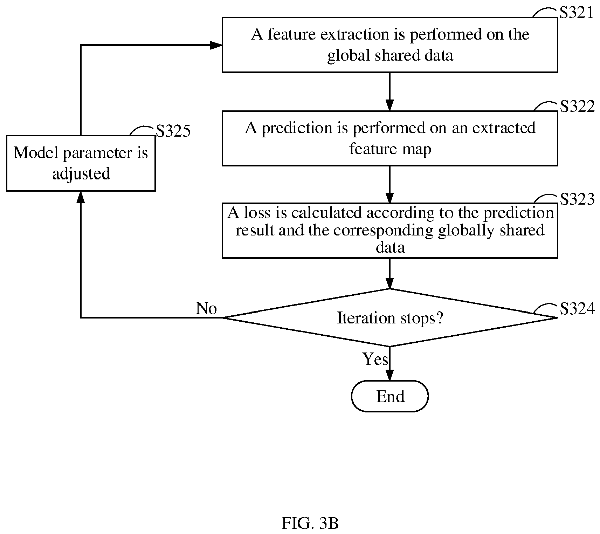

The federated learning method provided by the present disclosure will be described in detail below with reference to FIG. 2, FIG. 3A and FIG. 3B.

It should be noted that a sequence number of each operation in the following methods is merely used to represent the operation for ease of description, and should not be regarded as indicating an execution order of each operation. Unless explicitly stated, the methods do not need to be performed exactly in the order shown.

FIG. 2 shows a flowchart of a federated learning method according to exemplary embodiments of the present disclosure.

As shown in FIG. 2, a federated learning method 200 includes operation S210 and operation S220.

In operation S210, a plurality of rounds of training are performed on a global model to be trained, until a training end condition is met, so as to obtain a trained global model.

According to embodiments of the present disclosure, a type of the global model is not limited, for example, the global model may be an image retrieval model that uses an image as input data, an object recognition model that uses an image as input data, a speech recognition model that uses an audio as input data, or a text recognition model that uses a text as input data. The training end condition may be at least one selected from that the model converges or a specified number of training times is reached.

In operation S220, the trained global model is published to a plurality of devices.

For example, when the trained global model is obtained through a plurality of rounds of training, the trained global model may be published to the plurality of devices 101a, 101b and 101c as shown in FIG. 1, so that the plurality of devices 101a, 101b and 101c may perform, for example, a speech recognition, an image recognition, a text analysis, and the like.

For each round of training in the plurality of rounds of training, the federated learning method may further include sub-operation S211 to sub-operation S214.

In sub-operation S211, a current global model is sent to at least some of the plurality of devices. For example, at least some devices may be selected from the plurality of devices as participants in the round of training (hereinafter referred to as edge devices), and the current global model may be sent to the selected edge devices. Each edge device may perform a plurality of training iterations on the current global model based on local data, so as to obtain a trained parameter. As an example, after receiving the current global model, an edge device may select training data for the training from the local data, and input the training data into the received current global model to perform the training. The edge device may determine whether to end the training according to whether the trained current global model converges or according to whether the training times reach a specified number of iterations. When the training ends, the edge device may return the trained parameter for the current global model to the server.

In sub-operation S212, the trained parameters for the current global model are received from the at least some devices. For example, the trained parameters for the current global model may be received from the devices that are training participants.

In sub-operation S213, an aggregation is performed on the received parameters to obtain a current aggregation model.

After the trained parameters for the current global model are received from the devices, an aggregation may be performed on the received parameters. For example, by averaging or weighted averaging the received parameters, the aggregation may be performed and an aggregation parameter may be obtained. A parameter of the current global model may be updated using the aggregation parameter, so as to obtain the current aggregation model.

In sub-operation S214, the current aggregation model is adjusted based on the globally shared dataset, and the adjusted aggregation model is updated as a new current global model for a next round of training.

The globally shared dataset may be a dataset formed by uploading data by devices that voluntarily share data, which may be stored locally by the server or distributed and stored in the network. The globally shared data is generally independent and identically distributed with total device data existing in the network. In an example, the current aggregation model may be trained using the globally shared dataset, so as to adjust the current aggregation model.

The federated learning method according to exemplary embodiments of the present disclosure is described above. This method may be implemented to accelerate a convergence of the current aggregation model by adjusting the current aggregation model using independent and identically distributed globally shared data. In addition, when local data at each device is non-independent and identically distributed data, the federated learning method according to exemplary embodiments of the present disclosure may be implemented to reduce an influence of the non-independent and identically distributed local data on a model performance loss by adjusting the current aggregation model using the globally shared data.

An example operation of adjusting the current aggregation model based on the globally shared dataset will be described below with reference to FIG. 3A and FIG. 3B. FIG. 3A shows a schematic diagram of sub-operations of adjusting the current aggregation model based on the globally shared dataset in the federated learning method according to exemplary embodiments of the present disclosure.

As shown in FIG. 3A, a target object detection model is taken as an example of the global model in describing an example operation of adjusting the current aggregation model based on a globally shared dataset 30a. Typically, a model may be represented by a model parameter.

Those skilled in the art should understand that the global model according to exemplary embodiments of the present disclosure is not limited to the above-mentioned target object detection model, and may be any other type of model.

The target object detection model used in this example may structurally include two parts, namely, a feature extraction layer 321 and a prediction part 322. The feature extraction layer 321 may acquire the data 30a, such as data containing an image, and perform a feature extraction on the acquired data to generate a plurality of feature maps PI, P2 and P3. The prediction part 322 may detect a target object by using at least one selected from the feature maps PI, P2 and P3, so as to obtain an information of the target object, that is, a prediction result 30b.

In examples of the present disclosure, during a $t^{th}$ round of training of the global model, when trained parameters w1, w2, w3... are received from respective edge devices, an aggregation may be performed on the received parameters, for example, the received parameters may be averaged to obtain an aggregation parameter $w^{t-}$, and a parameter of the current global model may be updated according to the aggregation parameter $w^{t-}$, as indicated by reference numeral 310.

When the update of the parameter of the current global model is completed, a current aggregation model may be obtained, which may be represented by the aggregation parameter $w^{t-}$. A training iteration may be performed on the current aggregation model by using the globally shared dataset, so as to adjust the model parameter, as indicated by reference numeral 320. For example, a plurality of training iterations may be performed on the current aggregation model by using the data 30a in the globally shared dataset, and whether to stop the iteration may be determined by determining whether an iteration stop condition is met. The iteration stop condition may include that a loss converges and/or the iteration reaches a specified number of times (hereinafter referred to as a number of server-side iterations), as indicated by reference numerals 323 and 326. In exemplary embodiments of the present disclosure, the convergence of the current aggregation model may be accelerated by adjusting the current aggregation model using the globally shared data.

FIG. 3B shows a flowchart of operations in each training iteration of adjusting the parameter by using the globally shared dataset according to exemplary embodiments of the present disclosure.

During each training iteration, the globally shared data 30a in the globally shared dataset is input into the current aggregation model as training data. In step S321, a feature extraction is performed on the globally shared data by the feature extraction layer, and in step S322, a prediction is performed on an extracted feature map by the prediction part, so as to obtain the prediction result 30b for the globally shared data 30a.

When the prediction result 30b is obtained, in step S323, a loss is calculated according to the prediction result 30b and the corresponding globally shared data 30a. In step S324, it is determined whether to stop the iteration. For example, whether to stop the iteration may be determined by determining whether an iteration stop condition is met. The iteration stop condition may be that the loss of the model converges and/or the iteration reaches a specified number of times (hereinafter referred to as a number of server-side iterations), as indicated by reference numerals 323 and 326.

When it is determined that the iteration stop condition is not met (S324-No), the model parameter may be adjusted according to the calculated loss, as shown in step S325. Otherwise (S324-Yes), the iteration ends. When the specified number of iterations is reached or the loss converges, the adjusted aggregation model may be used as a new current global model for a $(t+1)^{th}$ round of training. The new current global model is represented by a new model parameter w.

In exemplary embodiments of the present disclosure, the globally shared dataset $D_0$ contains $n_0$ data pairs $\{x_{0,j}, y_{0,j}\}$, where $x_{0,j}$ represents $j^{th}$ data, and $y_{0,j}$ represents a prediction result for $x_{0,j}$.

A goal of model training is generally to find the model parameter w that may minimize the loss function on the dataset. A loss function $F_0(w)$ may be expressed by Equation (1).

$$F_0(w) \triangleq \frac{1}{n_0} \sum_{\{x_{0,j}, y_{0,j}\} \in D_0} f\left(w, x_{0,j}, y_{0,j}\right) \qquad (1)$$

where $f(w, x_{0,j}, y_{0,j})$ is used to measure an error of the model parameter w to the data $\{x_{0,j}, y_{0,j}\}$.

However, for the federated learning method according to the present disclosure, if a degree of adjustment using the globally shared data is too large, the adjusted model may excessively shift to the globally shared data, and lose a personality obtained by previous training of the edge devices, and therefore may not bring a performance improvement to the edge devices with rich personalized data. On the other hand, if the degree of adjustment using the globally shared data is too small, it means that the globally shared data is not fully utilized and may not bring a speed improvement to the entire federated learning process.

In view of this, the present disclosure proposes to control the degree of adjustment using the globally shared data, so as to make full use of the globally shared data to accelerate the model convergence while ensuring that the adjustment on the server side may not greatly shift to the globally shared data.

In an example, the present disclosure proposes to introduce a penalty term into the loss function to control the degree of adjustment.

When a current round of training is a $t^{th}$ round, the loss function with the penalty term introduced may be expressed by Equation (2).

$$F_0(w) \triangleq \frac{1}{n_0} \sum_{\{x_{0,j}, y_{0,j}\} \in D_0} f\left(w, x_{0,j}, y_{0,j}\right) + \frac{\mu}{2} \|w - w^{t-}\|^2 \qquad (2)$$

where $F_0(w)$ is a loss function of the adjusted aggregation model on the globally shared dataset $D_0$, $f(w, x_{0,j}, y_{0,j})$ is a loss function of the adjusted aggregation model for the data $\{x_{0,j}, y_{0,j}\}$, and $\mu$ represents a regularized weight parameter.

In the above example, a second term in Equation (2) uses a 2-norm as the penalty term to constrain the adjusted aggregation model. The penalty term limits a degree of parameter adjustment in a process of adjusting the model parameter using the globally shared data, so that the new current global model represented by the new model parameter w is close to the current aggregation model represented by the aggregation parameter $w^t$. In this way, a possibility of over training may be reduced, and the model may converge more smoothly.

In another example, the present disclosure further proposes to dynamically control the number of server-side iterations and/or the number of device-side iterations, so as to control the degree of adjustment.

For example, the number of server-side iterations of training the current aggregation model using the globally shared dataset may be dynamically controlled, so that the number of server-side iterations decreases with an increase of training round.

In the $t^{th}$ round in the federated learning process, the server may select a plurality of edge devices by using a device scheduling algorithm, so as to form a set of devices $S_t$. The selected edge devices may train the current global model sent by the server by using respective local data, so as to obtain trained parameters. An edge device k in the set of devices $S_t$ may have $n_k$ local data.

Upon receiving the trained parameters from the edge devices, the server may perform an aggregation on the received parameters to obtain a current aggregation model. In response to obtaining the current aggregation model, the server may iteratively adjust the current aggregation model multiple times based on the globally shared dataset. The number of server-side iterations $server\_iter_t$ may be expressed by Equation (3).

$$server\_iter_t = \alpha_t * local\_iter_t \qquad (3)$$

where $local\_iter_t$ represents an average number of iterations of the edge devices in the set of devices $S_t$ (hereinafter referred to as a number of device-side iterations), and $\alpha_t$ represents an iteration coefficient. The number of device-side iterations $local\_iter_t$ and the iteration coefficient $\alpha_t$ will be described in detail below.

The number of device-side iterations local_iter$_t$ may be further expressed by Equation (4).

$$\text{local\_iter}_t \;=\; \frac{1}{m}\sum_{k\in\mathcal{S}_t}\frac{n_k E}{B}=\frac{nE}{mB}\qquad\qquad(4)$$

where,

- m represents a number of edge devices in the set of devices $\mathcal{S}_t$ ; and
- $\dfrac{n_k E}{B}$ represents a number of iterations of the edge device k in the set of devices $\mathcal{S}_t$ , where B represents a batch size of local data, that is, a number of samples selected for one time of training, and E represents an epoch of the edge device.

In addition, the iteration coefficient $\alpha_t$ may be further expressed by Equation (5).

$$\alpha_t = (1 - acc) * p * decay^t\qquad\qquad(5)$$

where,

- *acc* represents an accuracy of evaluation of the current aggregation model represented by the aggregation parameter $w^{t\text{-}}$ on the globally shared dataset $D_0$; when the *acc* is low, it is generally desired to increase the degree of adjustment using the globally shared data, so that the adjusted aggregation model may quickly reach a certain accuracy; when the *acc* is high, an influence of central data may be reduced, so that the model may benefit more from the edge data.

- *p* represents a ratio of a sample size $n_0$ of the globally shared dataset to a total sample size *n* of the selected edge devices participating in the round of training, that is, $p = \dfrac{n_0}{n}$ , or

$$p = \frac{n_0}{\sum_{k\in\mathcal{S}_t} n_k};$$

and

- *decay* is a hyperparameter representing a decay rate, which is used to reduce a participation of the globally shared data in a later stage of federated learning. Typically, *decay* has a value between 0 and 1, and a smaller value means a faster decay. Since the value of *decay* is less than 1 and $\alpha_t$ is proportional to *decay*$^t$, $\alpha_t$ may decrease rapidly with the increase of the round *t*.

In this way, through a combined action of the number of device-side iterations and the iteration coefficient, it is possible to perform more iterations using the globally shared dataset in the early stage of federated learning to accelerate the model convergence, and reduce the number of iterations performed using the globally shared dataset in the middle and later stages of federated learning, so that more data from the edge devices may be used, and the trained model may be highly adaptable to users.

The above describes that the number of server-side iterations is dynamically controlled, so that the number of server-side iterations decreases with the increase of training round, thereby ensuring that the model may be highly adaptable to users while accelerating the model convergence.

It should be noted that in addition to dynamically controlling the number of server-side iterations, it is also possible to dynamically control the number of device-side iterations that each edge device performs in each round of training, so that the number of device-side iterations increases with the increase of training round, thereby achieving the same effect as above. In addition, those skilled in the art should understand that it is also possible to dynamically control both the number of server-side iterations and the number of device-side iterations, so that the number of server-side iterations decreases with the increase of training round and the number of device-side iterations increases with the increase of training round, thereby ensuring that the model may be highly adaptable to users while accelerating the model convergence.

The federated learning method according to exemplary embodiments of the present disclosure is described above with reference to FIG. 2 to FIG. 3B. By controlling the process of training the current aggregation model using the globally shared dataset, the possibility of over training may be reduced, the model convergence may be accelerated, and the trained model may be highly adaptable to users.

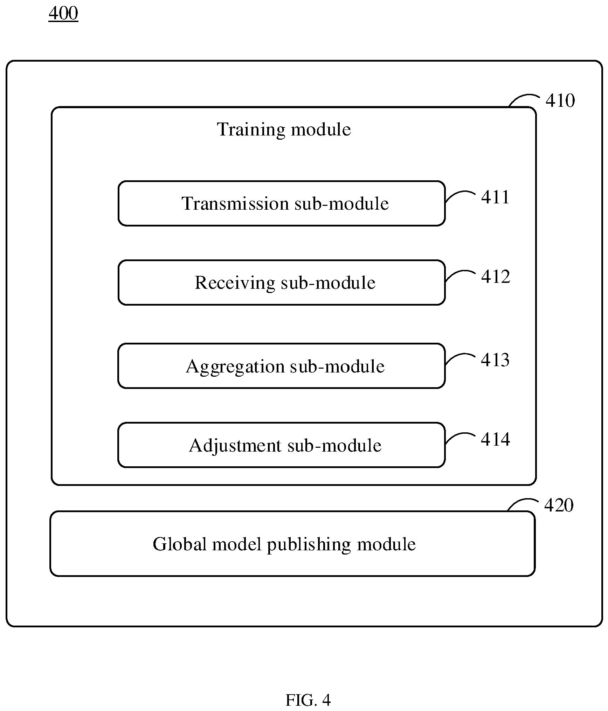

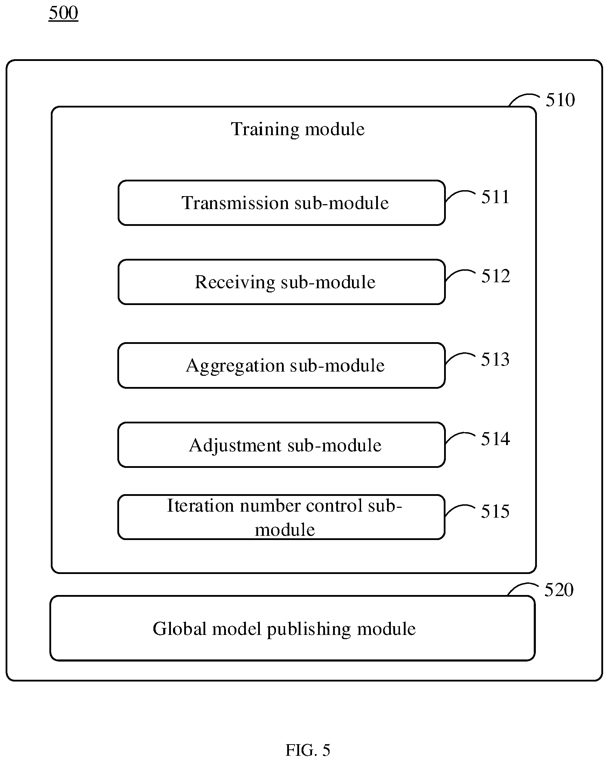

Examples of a federated learning apparatus according to exemplary embodiments of the present disclosure will be described below with reference to FIG. 4 and FIG. 5.

FIG. 4 shows a block diagram of an example of a federated learning apparatus according to exemplary embodiments of the present disclosure.

As shown in FIG. 4, a federated learning apparatus 400 may include a training module 410 and a global model publishing module 420. The training module 410 may be used to perform a plurality of rounds of training until a training end condition is met, so as to obtain a trained global model. The global model publishing module 420 may be used to publish the trained global model to a plurality of devices. According to embodiments of the present disclosure, a type of the global model is not limited, for example, it may be an image retrieval model that uses an image as input data, an object recognition model that uses an image as input data, a speech recognition model that uses an audio as input data, or a text recognition model that uses a text as input data. The training end condition may be at least one selected from that the model converges or a specified number of training times is reached.

The training module 410 may further include a transmission sub-module 411, a receiving sub-module 412, an aggregation sub-module 413, and an adjustment sub-module 414.

The transmission sub-module 411 may be used to transmit a current global model to at least some devices in the plurality of devices. For example, the federated learning apparatus 400 may select at least some devices from the plurality of devices as participants in the round of training (hereinafter referred to as edge devices), and transmit the current global model to the selected edge devices. Each edge device may perform a plurality of training iterations on the current global model based on local data, so as to obtain a trained parameter.

The receiving sub-module 412 may be used to receive trained parameters for the current global model from the at least some devices.

The aggregation sub-module 413 may be used to perform an aggregation on the received parameters to obtain a current aggregation model. For example, by averaging or weighted averaging the received parameters, the aggregation may be performed and an aggregation parameter may be obtained. A parameter of the current global model may be updated using the aggregation parameter, so as to obtain the current aggregation model.

The adjustment sub-module 414 may be used to adjust the current aggregation model based on a globally shared dataset, and update the adjusted aggregation model as a new current global model for a next round of training.

According to embodiments of the present disclosure, the adjustment sub-module 414 may be further used to: adjust the current aggregation model by training the current aggregation model using the globally shared dataset. For example, the adjustment sub-module 414 may be further used to: train the current aggregation model by using the globally shared dataset, so that a loss function of the adjusted aggregation model on the globally shared dataset is minimized, and the adjusted aggregation model is close to the current aggregation model.

In an example, the adjustment sub-module 414 is further used to: train the current aggregation model by using a loss function expressed by Equation (6), so that the loss function of the adjusted aggregation model on the globally shared dataset is minimized, and the adjusted aggregation model is close to the current aggregation model.

$$F_0(w) \triangleq \frac{1}{n_0} \sum_{\{x_{0,j},\, y_{0,j}\} \in D_0} f\left(w, x_{0,j},\, y_{0,j}\right) + \frac{\mu}{2} \left\| w - w^{t-} \right\|^2 \qquad (6)$$

where $F_0(w)$ represents the loss function of the adjusted aggregation model w on the globally shared dataset $D_0$, $f(w, x_{0,j}, y_{0,j})$ represents a loss function of the adjusted aggregation model w for data $\{x_{0,j}, y_{0,j}\}$, $w^{t-}$ represents an aggregation model in a current round, and $\mu$ represents a regularized weight parameter.

The present disclosure proposes a federated learning apparatus, in which a degree of adjusting the model parameter using the globally shared data may be limited by an optimization of the loss function, so that a possibility of over training may be reduced, and the model may converge more smoothly.

FIG. 5 shows a block diagram of another example of a federated learning apparatus according to exemplary embodiments of the present disclosure.

Similar to FIG. 4, a federated learning apparatus 500 in FIG. 5 may include a training module 510 and a global model publishing module 520. Same or similar reference numerals are used to indicate same or similar elements.

In order to simplify the description, only differences between FIG. 4 and FIG. 5 will be described in detail below.

As shown in FIG. 5, in addition to a transmission sub-module 511, a receiving sub-module 512, an aggregation sub-module 513 and an adjustment sub-module 514, the federated learning apparatus 500 may further include an iteration number control sub-module 515.

The iteration number control sub-module 515 may be used to dynamically control a number of server-side iterations of training the current aggregation model using the globally shared dataset, so that the number of server-side iterations decreases with an increase of the round of training. For example, for a $t^{th}$ round of training, the number of server-side iterations server_iter$_t$ may be expressed by Equation (7).

$$\text{server\_iter}_t \; = \alpha_t * \text{local\_iter}_t \qquad (7)$$

where local_iter$_t$ represents an average number of iterations of the edge devices in the set of devices $\mathcal{S}_t$, and $\alpha_t$ represents an iteration coefficient.

It should be noted that in addition to dynamically controlling the number of server-side iterations, the iteration number control sub-module 515 may also dynamically control a number of device-side iterations performed by each device in the at least some devices in each round of training, so that the number of device-side iterations increases with an increase of the round of training, thereby achieving the same effect as above. Those skilled in the art should understand that it is also possible to dynamically control both the number of server-side iterations and the number of device-side iterations, so that the number of server-side iterations decreases with the increase of training round and the number of device-side iterations increases with the increase of training round, thereby ensuring that the model may be highly adaptable to users while accelerating the model convergence.

By dynamically controlling the number of server-side iterations and/or the number of device-side iterations, the federated learning apparatus proposed in the present disclosure may be implemented to perform more iterations using the globally shared dataset in the early stage of federated learning to accelerate the model convergence, and reduce the number of iterations performed using the globally shared dataset in the middle and later stages of federated learning, so that more data from the edge devices may be used, and the trained model may be highly adaptable to users.

The federated learning apparatus according to exemplary embodiments of the present disclosure is described above with reference to FIG. 4 and FIG. 5. By controlling the process of training the current aggregation model using the globally shared dataset, the possibility of over training may be reduced, the model convergence may be accelerated, and the trained model may be highly adaptable to users.

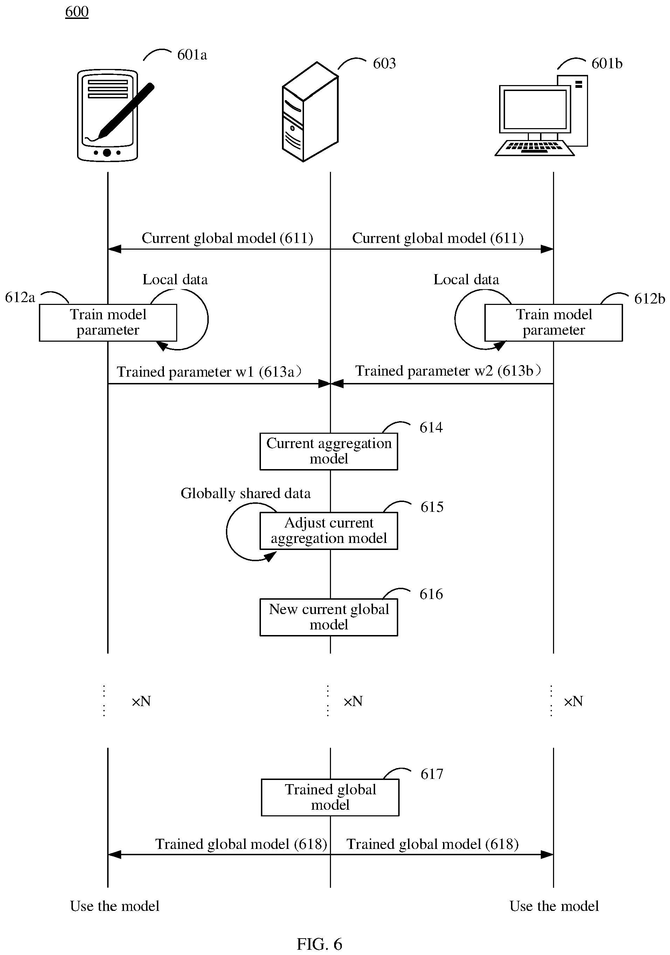

FIG. 6 shows a diagram of a signal flow of a federated learning system according to exemplary embodiments of the present disclosure.

As shown in FIG. 6, a federated learning system 600 may include a plurality of devices and a server 603. The plurality of devices are communicatively connected to the server 603.

The server 603 may be used to: perform a plurality of rounds of training until a training end condition is met, so as to obtain a trained global model; and publish the trained global model to a plurality of devices. The server 603 may be any apparatus using the federated learning method according to exemplary embodiments of the present disclosure described above with reference to FIG. 2 to FIG. 3B, or may be the federated learning apparatus according to exemplary embodiments of the present disclosure described above with reference to FIG. 4 and FIG. 5.

During each round of the learning process, the server 603 may select a device 601a and a device 601b from the plurality of devices as the participants of the round of training, and transmit the current global model to the device 601a and the device 601b, as indicated by reference numeral 611.

The devices 601a/601b may perform model parameter training on the received current global model based on respective local data, as indicated by reference numerals 612a and 612b.

After a plurality of training iterations are performed, the devices 601a/601b may obtain trained parameters w1/w2, and transmit the trained parameters to the server 603, as indicated by reference numerals 613a and 613b.

The server 603 may receive the trained parameters from the devices and perform an aggregation on the received parameters, such as averaging or weighted averaging the received parameters. Then, the parameter of the current global model may be updated using the aggregation parameter to obtain a current aggregation model, as indicated by reference numeral 614.

When the current aggregation model is obtained, the server 603 may adjust the current aggregation model based on the globally shared data, as indicated by reference numeral 615. For example, a plurality of training iterations may be performed with reference to the process shown in FIG. 3A and FIG. 3B, so as to adjust the parameter.

When the iteration stop condition is met, the round of training may end. Then, a new current global model for a next round of training may be obtained, as indicated by reference numeral 616.

The operations performed by the server and the edge devices during one round of training are described above. In federated learning, it is generally required to perform a plurality of rounds of training, and the above-mentioned operations are usually performed N times until the training end condition is met. Then the trained global model may be obtained, as indicated by reference numeral 617.

The server 603 may publish the trained global model to all of the plurality of devices included in the federated learning system 600, so that the plurality of devices may use the model, as indicated by reference numeral 618.

The above describes the federated learning system according to exemplary embodiments of the present disclosure. By controlling the process of training the current aggregation model using the globally shared dataset, the possibility of over training may be reduced, the model convergence may be accelerated, and the trained model may be highly adaptable to users.

According to embodiments of the present disclosure, the present disclosure further provides an electronic device, a readable storage medium, and a computer program product.

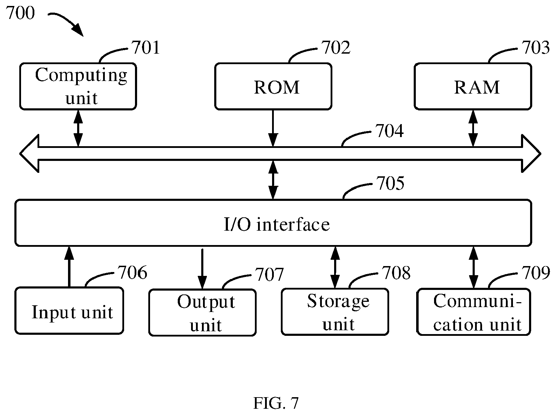

FIG. 7 shows a schematic block diagram of an exemplary electronic device 700 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device 700 includes a computing unit 701 which may perform various appropriate actions and processes according to a computer program stored in a read only memory (ROM) 702 or a computer program loaded from a storage unit 708 into a random access memory (RAM) 703. In the RAM 703, various programs and data necessary for an operation of the electronic device 700 may also be stored. The computing unit 701, the ROM 702 and the RAM 703 are connected to each other through a bus 704. An input/output (I/O) interface 705 is also connected to the bus 704.

A plurality of components in the electronic device 700 are connected to the I/O interface 705, including: an input unit 706, such as a keyboard, or a mouse; an output unit 707, such as displays or speakers of various types; a storage unit 708, such as a disk, or an optical disc; and a communication unit 709, such as a network card, a modem, or a wireless communication transceiver. The communication unit 709 allows the electronic device 700 to exchange information/data with other devices through a computer network such as Internet and/or various telecommunication networks.

The computing unit 701 may be various general-purpose and/or dedicated processing assemblies having processing and computing capabilities. Some examples of the computing units 701 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 701 executes various methods and steps described above, such as the methods and steps shown in FIG. 2 to FIG. 3B. For example, in some embodiments, the methods and steps shown in FIG. 2 to FIG. 3B may be implemented as a computer software program which is tangibly embodied in a machine-readable medium, such as the storage unit 708. In some embodiments, the computer program may be partially or entirely loaded and/or installed in the electronic device 700 via the ROM 702 and/or the communication unit 709. The computer program, when loaded in the RAM 703 and executed by the computing unit 701, may execute one or more steps in the methods described above. Alternatively, in other embodiments, the computing unit 701 may be configured to perform the methods and steps described above by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium.

The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server for distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A federated learning method for training a global model, comprising:

    performing (S210) a plurality of rounds of training until a training end condition is met, so as to obtain (617) a trained global model; and
    publishing (S220, 618) the trained global model to a plurality of devices,
    wherein each round of training in the plurality of rounds of training comprises:

    transmitting (S211, 611) a current global model to at least some devices (601a, 601b) in the plurality of devices;
    receiving (S212, 613a, 613b) trained parameters for the current global model from the at least some devices (601a, 601b);
    performing (S213, 310, 614) an aggregation on the received parameters to obtain a current aggregation model; and
    adjusting (S214, 320, 615) the current aggregation model based on a globally shared dataset (30a), and updating (616) the adjusted aggregation model as a new current global model for a next round of training.

2. The federated learning method according to claim 1, wherein the adjusting (S214, 320, 615) the current aggregation model based on a globally shared dataset (30a) comprises:
   adjusting the current aggregation model by training the current aggregation model using the globally shared dataset (30a).

**3.** The federated learning method according to claim 2, wherein the adjusting the current aggregation model by training the current aggregation model using the globally shared dataset (30a) comprises:
training the current aggregation model by using the globally shared dataset (30a), so that a loss function of the adjusted aggregation model on the globally shared dataset (30a) is minimized, and the adjusted aggregation model is close to the current aggregation model.

**4.** The federated learning method according to claim 3, wherein the current aggregation model is trained by using a loss function $F_0(w) \triangleq \frac{1}{n_0} \sum_{\{x_{0,j},\, y_{0,j}\} \in D_0} f\left(w, x_{0,j},\, y_{0,j}\right) + \frac{\mu}{2} \left\| w - w^{t-} \right\|^2$ , so that the loss function of the adjusted aggregation model on the globally shared dataset (30a) is minimized, and the adjusted aggregation model is close to the current aggregation model, where $F_0(w)$ represents the loss function of the adjusted aggregation model w on the globally shared dataset $D_0$, $f(w, x_{0,j}, y_{0,j})$ represents a loss function of the adjusted aggregation model $w$ for data $\{x_{0,j}, y_{0,j}\}$, $w^{t-}$ represents an aggregation model in a current round, and $\mu$ represents a regularized weight parameter.

**5.** The federated learning method according to claim 2, further comprising:
dynamically controlling (326) a number of server-side iterations of training the current aggregation model using the globally shared dataset (30a), so that the number of server-side iterations decreases with an increase of the round of training.

**6.** The federated learning method according to claim 2, further comprising:
dynamically controlling a number of device-side iterations performed by each device in the at least some devices (601a, 601b) in each round of training, so that the number of device-side iterations increases with an increase of the round of training.

**7.** A federated learning apparatus for training a global model, comprising:

a training module (410, 510) configured to perform a plurality of rounds of training until a training end condition is met, so as to obtain a trained global model; and
a global model publishing module (420, 520) configured to publish the trained global model to a plurality of devices,
wherein the training module (410, 510) further comprises:

a transmission sub-module (411, 511) configured to transmit a current global model to at least some devices in the plurality of devices;
a receiving sub-module (412, 512) configured to receive trained parameters for the current global model from the at least some devices;
an aggregation sub-module (413, 513) configured to perform an aggregation on the received parameters to obtain a current aggregation model; and
an adjustment sub-module (414, 514) configured to adjust the current aggregation model based on a globally shared dataset, and update the adjusted aggregation model as a new current global model for a next round of training.

**8.** The federated learning apparatus according to claim 7, wherein the adjustment sub-module (414, 514) is further configured to:
adjust the current aggregation model by training the current aggregation model using the globally shared dataset.

**9.** The federated learning apparatus according to claim 8, wherein the adjustment sub-module (414, 514) is further configured to:

train the current aggregation model by using the globally shared dataset, so that a loss function of the adjusted aggregation model on the globally shared dataset is minimized, and the adjusted aggregation model is close to the current aggregation model,

wherein the adjustment sub-module (414, 514) is further configured to:

train the current aggregation model by using a loss function $F_0(w) \triangleq$ $\frac{1}{n_0} \sum_{\{x_{0,j}, y_{0,j}\} \in D_0} f(w, x_{0,j}, y_{0,j}) + \frac{\mu}{2} \|w - w^{t-}\|^2$ , so that the loss function of the adjusted aggregation model on the globally shared dataset is minimized, and the adjusted aggregation model is close to the current aggregation model, where $F_0(w)$ represents the loss function of the adjusted aggregation model $w$ on the globally shared dataset $D_0$, $f(w, x_{0,j}, y_{0,j})$ represents a loss function of the adjusted aggregation model w for data $\{x_{0,j}, y_{0,j}\}$, $w^t$-represents an aggregation model in a current round, and $\mu$ represents a regularized weight parameter.

10. The federated learning apparatus according to claim 8, wherein the training module (410, 510) further comprises: an iteration number control sub-module (515) configured to dynamically control a number of server-side iterations of training the current aggregation model using the globally shared dataset, so that the number of server-side iterations decreases with an increase of the round of training.

11. The federated learning apparatus according to claim 8, wherein the training module (410, 510) further comprises: an iteration number control sub-module (515) configured to dynamically control a number of device-side iterations performed by each device in the at least some devices in each round of training, so that the number of device-side iterations increases with an increase of the round of training.

12. A federated learning system (600) for training a global model, comprising:

   a server (603); and
   a plurality of devices communicatively connected to the server (603),
   wherein the server (603) is configured to:

      perform (S210) a plurality of rounds of training until a training end condition is met, so as to obtain (617) a trained global model; and
      publish (S220, 618) the trained global model to a plurality of devices,
      wherein each round of training in the plurality of rounds of training comprises:

         transmitting (S211, 611) a current global model to at least some devices (601a, 601b) in the plurality of devices;
         receiving (S212, 613a, 613b) trained parameters for the current global model from the at least some devices (601a, 601b);
         performing (S213, 310, 614) an aggregation on the received parameters to obtain a current aggregation model; and
         adjusting (S214, 320, 615) the current aggregation model based on a globally shared dataset (30a), and updating (616) the adjusted aggregation model as a new current global model for a next round of training.

13. An electronic device (700), comprising:

   at least one processor; and
   a memory communicatively connected to the at least one processor, wherein the memory stores instructions executable by the at least one processor, and the instructions, when executed by the at least one processor, cause the at least one processor to implement the method of any one of claims 1 to 6.

14. A non-transitory computer-readable storage medium having computer instructions therein, wherein the computer instructions are configured to cause a computer to implement the method of any one of claims 1 to 6.

15. A computer program product containing a computer program, wherein the computer program, when executed by a processor, causes the processor to implement the method of any one of claims 1 to 6.

100

101a

101b

101c

102

103

FIG. 1

200

S210

A plurality of rounds of training are performed until a training end condition is met, so as to obtain a trained global model

S211

A current global model is transmitted to at least some of a plurality of devices

S212

The trained parameters for the current global model are received from the at least some devices

S213

An aggregation is performed on the received parameters to obtain a current aggregation model

S214

The current aggregation model is adjusted based on the globally shared dataset, and the adjusted aggregation model is updated as a new current global model for a next round of training

S220

The trained global model is published to the plurality of devices

FIG. 2

Trained parameters w1,w2,w3....
from respective devices

Parameter aggregation and parameter update —310

Aggregation parameter $w^{t-}$

—320

Current aggregation model

Feature extraction layer —321

P3
P2
P1

Prediction part —322

Globally shared data 30a

Prediction result 30b

Adjusted parameter

Adjust model parameter —325

Determine stop of iteration —324

Loss

Calculate loss —323

Iteration times

Control iteration times —326

Parameter w of new current global model

**FIG. 3A**

A feature extraction is performed on the global shared data ⌒S321

Model parameter is adjusted ⌒S325

A prediction is performed on an extracted feature map ⌒S322

A loss is calculated according to the prediction result and the corresponding globally shared data ⌒S323

No ← Iteration stops? ⌒S324

Yes

End

FIG. 3B

400

Training module 410

Transmission sub-module 411

Receiving sub-module 412

Aggregation sub-module 413

Adjustment sub-module 414

Global model publishing module 420

FIG. 4

500

Training module ~510

Transmission sub-module ~511

Receiving sub-module ~512

Aggregation sub-module ~513

Adjustment sub-module ~514

Iteration number control sub-module ~515

Global model publishing module ~520

FIG. 5

600

~ 601a    ~ 603    ~ 601b

Current global model (611)    Current global model (611)

Local data    Local data

612a    612b
Train model parameter    Train model parameter

Trained parameter w1 (613a)    Trained parameter w2 (613b)

~ 614
Current aggregation model

Globally shared data    ~ 615
Adjust current aggregation model

~ 616
New current global model

⋮ ×N    ⋮ ×N    ⋮ ×N

~ 617
Trained global model

Trained global model (618)    Trained global model (618)

Use the model    Use the model

FIG. 6

700

701
Computing unit

702
ROM

703
RAM

704

705
I/O interface

706
Input unit

707
Output unit

708
Storage unit

709
Communi-cation unit

FIG. 7